# EUROPEAN PATENT APPLICATION

(11) **EP 3 279 771 A1**
(43) Date of publication of application: **07.02.2018**
(21) Application number: 17184195.0
(22) Date of filing: 01.08.2017
(51) Int. Cl.: G06F 3/01, G06T 19/00, G06K 9/00

(54) **DETECTION OF EXTERNAL OBJECTS IN FRONT OF A VIRTUAL REALITY USER**

(30) Priority: 01.08.2016 KR 20160097833
(71) Applicant: Samsung Electronics Co., Ltd., Gyeonggi-do 16677 (KR)
(72) Inventor: Han, Jong Hyun, 06038 Seoul (KR); Kim, Bo Keun, 16699 Suwon-si (KR); An, Sung Youn, 13568 Seongnam-si (KR)
(74) Representative: Nederlandsch Octrooibureau

(57) **Abstract**

A head mounted electronic device includes a display that displays a virtual reality (VR) image in left-eye and right-eye lens areas, a camera module that photographs an image, and a processor that detects at least one object existing within a photographing range of the camera module based on the photographed image of the camera module. The processor is configured to switch the VR image to the photographed image or to an augmented reality (AR) image including at least part of the photographed image if at least one object exists within a first area, the first area being an area from the camera module to a point spaced apart from the camera module by a first distance within the photographing range.

## Description

### PRIORITY

This application claims priority to Korean Patent Application No. 10-2016-0097833, filed August 1, 2016 the content of which is incorporated herein by reference.

### BACKGROUND OF THE INVENTION

### 1. Field of the Invention

The present disclosure relates generally to an image display technology based on a head mounted display device.

### 2. Background of the Invention

Various shapes of image devices are being suggested as image processing technologies rapidly develop. For example, a head mounted display (HMD) device that is a wearable image display device mountable on the body may display an image in the field of view of a user.

The HMD device may display a large-screen, high-magnification image through an internal optical device based on an image signal provided from an external digital device or an internal device. In addition, the HMD device may display a stereoscopic virtual reality (VR) image and may be used in various fields such as an education field, a military field, a medical field, or an industry field.

Since the HMD device is operated while being mounted on a facial area of the user, the field of view of the user may be restricted within an inner area of the HMD device. In this case, the user that views an image through the HMD device may fail to perceive a peripheral environment, thus colliding with a peripheral object (e.g., animals, things, human bodies, or the like).

### SUMMARY OF THE INVENTION

Example aspects of the present disclosure address at least the above-mentioned problems and/or disadvantages and to provide at least the advantages described below. Accordingly, an example aspect of the present disclosure provides an image display method that allows a user wearing an HMD device to perceive an environment on a real space based on an image taken from an object adjacent to the HMD device and an electronic device supporting the same.

In accordance with an example aspect of the present disclosure, a head mounted electronic device may include a display configured to display a virtual reality (VR) image in left-eye and right-eye lens areas, a camera module configured to photograph an image, and a processor configured to detect at least one object existing within a photographing range of the camera module based on the photographed image of the camera module.

According to an example embodiment, the processor may switch the VR image into the photographed image or into an augmented reality (AR) image including at least part of the photographed image if at least one object exists within a first area, the first area comprising an area from the camera module to a point spaced apart from the camera module by a first distance within the photographing range.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and attendant advantages of the present disclosure will be more apparent and readily appreciated from the following detailed description, taken in conjunction with the accompanying drawings, in which like reference numerals refer to like elements, and wherein:
FIG. 1 is a diagram illustrating an example head mounted display device according to an example embodiment;
FIG. 2 is a diagram illustrating an example of an operation of the head mounted display device according to an example embodiment;
FIG. 3 is a diagram illustrating an example of a real space in which the head mounted display device is operated according to an example embodiment;
FIG. 4 is a diagram illustrating an example configuration of an electronic device according to an example embodiment;
FIG. 5A is a diagram illustrating an example first embodiment in which an object exists within a first area ;
FIG. 5B is a diagram illustrating an example of image switching according to the first embodiment;
FIG. 5C is a diagram illustrating another example of image switching according to the first embodiment;
FIG. 5D is a diagram illustrating another example of image switching according to the first embodiment;
FIG. 6A is a diagram illustrating an example second embodiment in which an object exists within a second area;
FIG. 6B is a diagrams illustrating an example of image switching according to the second embodiment;
FIG. 7A is a diagram illustrating an example third embodiment in which an object exists within a photographing range of a camera module;
FIG. 7B is a diagram illustrating an example of image switching according to the third embodiment;
FIG. 8 is a flowchart illustrating an example image display method of the electronic device according to an example embodiment; and
FIG. 9 is a flowchart illustrating an example image display method of the electronic device according to another example embodiment.

Throughout the drawings, it should be noted that like reference numbers are used to depict the same or similar elements, features, and structures.

### DETAILED DESCRIPTION OF EMBODIMENTS OF THE PRESENT INVENTION

Various example embodiments of the present disclosure may be described with reference to accompanying drawings. Accordingly, those of ordinary skill in the art will recognize that modifications, equivalents, and/or alternatives of the various embodiments described herein can be variously made without departing from the scope and spirit of the present disclosure. With regard to description of drawings, similar elements may be marked by similar reference numerals.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in this disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. On the other hand, when an element (e.g., a first element) is referred to as being "directly coupled with/to" or "directly connected to" another element (e.g., a second element), it should be understood that there are no intervening element (e.g., a third element).

According to the situation, the expression "configured to" used herein may be used interchangeably with, for example, the expression "suitable for", "having the capacity to", "designed to", "adapted to", "made to", or "capable of". The term "configured to" must not mean only "specifically designed to" in hardware. Instead, the expression "a device configured to" may refer to a situation in which the device is "capable of" operating together with another device or other components. For example, a "processor configured to perform A, B, and C" may refer to a dedicated processor (e.g., an embedded processor) for performing a corresponding operation or a generic-purpose processor (e.g., a central processing unit (CPU) or an application processor) which may perform corresponding operations by executing one or more software programs which are stored in a memory device.

Terms used in this disclosure are used to describe specified embodiments of the present disclosure and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined herein in various embodiments of the present disclosure. In some cases, even if terms are terms which are defined in the disclosure, they may not be interpreted to exclude embodiments of the present disclosure.

An electronic device according to various embodiments of the present disclosure may include at least one of a smartphone, a tablet personal computer (PC), a mobile phone, a video telephone, an electronic book reader, a personal digital assistant (PDA), a portable multimedia player (PMP), or a smart camera, or the like, but is not limited thereto.

According to various embodiments, the electronic device may be one of the above-described devices or a combination thereof. An electronic device according to an embodiment may be a flexible electronic device. Furthermore, an electronic device according to an embodiment may not be limited to the above-described electronic devices and may include other electronic devices and new electronic devices according to the development of technologies.

Hereinafter, electronic devices according to an embodiment of the present disclosure will be described with reference to the accompanying drawings. The term "user" used herein may refer to a person who uses an electronic device (or a head mounted display device) or may refer to a device (e.g., an artificial intelligence electronic device).

An electronic device described across the disclosure may be operated while being mounted on a head mounted display (HMD) device and may be configured to be removable from the HMD device. Alternatively, the electronic device may include the HMD device or may be physically or operatively integrated with the HMD device. Below, an example embodiment in which an electronic device is mounted and operated on an HMD device will be described.

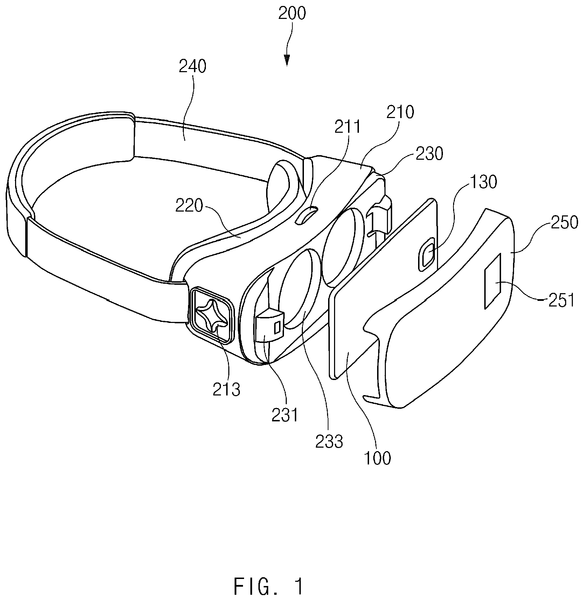

FIG. 1 is a diagram illustrating an example head mounted display device according to an example embodiment.

Referring to FIG. 1, an HMD device 200 may include a main frame 210, a support member 220, a front frame 230, or a mounting member 240. An electronic device 100 may be included as an element of the HMD device 200.

The main frame 210 may form a body of the HMD device 200 and may also accommodate at least some of elements associated with performing a function of the HMD device 200. The main frame 210 may be supported by the support member 220 on a face (e.g., a facial area) of the user. For this reason, the main frame 210 may be formed of a lightweight material (e.g., plastic).

The main frame 210 may include a positioning member 211 and/or an input member 213. The positioning member 211 may control a front or rear movement of the front frame 230. For example, if the user operates the positioning member 211, at least part of the front frame 230 may be inserted into the main frame 210 or may protrude to the outside from the main frame 210. As such, the electronic device 100 mounted on the front frame 230 may come close to a user's face or may be spaced apart from the user's face. The user may adjust a location of the electronic device 100 through the positioning member 211 to make a sight environment suitable for the user. In various embodiments, the positioning member 211 may include, for example, a wheel, a dial, or the like.

The input member 213 may include various input circuitry and allow a function of the electronic device 100 to operate in response to, for example, a user input (e.g., a touch, a press, a drag, or the like). In this regard, the user may allow a graphic user interface (GUI) to be displayed on a screen displayed in sight, by using the input member 213. The user may control a settings item associated with image playback, such as an audio volume of the electronic device 100, by operating the input member 213 such that an input signal is applied to at least one object (e.g., a settings menu) included in the GUI. In various embodiments, the input member 213 may include at least one of a touch pad, a physical button, a joystick, and a wheel.

The main frame 210 may further include a connector (not illustrated) for communicating with the electronic device 100. The connector may perform a role of an input/output interface between the HMD device 200 and the electronic device 100. For example, an input applied to the input member 213 (or a signal input to the GUI) may be transferred to the electronic device 100 through the connector. In various embodiments, the connector may include a USB connector that is connectable to a USB port of the electronic device 100. Also, in various embodiments, the connector may be implemented with a coupling member 231 itself or may be disposed in a partial area of the coupling member 231.

The support member 220 may support the main frame 210 on the user's face (e.g., a facial area). The support member 220 may be coupled to one side surface (e.g., a rear surface) of the main frame 210 or may be integrally formed with the main frame 210. The support member 220 may have a structure corresponding to a facial curve of a human, thus closely making contact with the user's face. In various embodiments, at least a partial area of the support member 220 may include a cushion material for reducing physical friction with the user's face, physical impact, or the like.

The front frame 230 may provide an area for mounting (or integration with or accommodating) the electronic device 100. In this regard, a shape of the front frame 230 may correspond to the size or area of the electronic device 100. In an embodiment, the front frame 230 may include at least one coupling member 231 for fixing the electronic device 100. At least part of a lens assembly 233 disposed inside the front frame 230 (or the main frame 210) may be exposed through at least a partial area of the front frame 230. Accordingly, the user that wears the HMD device 200 may view at least a partial area (e.g., a front display area) of the electronic device 100 through the lens assembly 233.

The mounting member 240 (e.g., a band) may fix the main frame 210 on the user's face upon wearing the HMD device 200. Opposite ends of the mounting member 240 may have a hook structure and may be connected with opposite ends of the main frame 210. The mounting member 240 may include, for example, an elastic material or may include a member (e.g., a buckle, a Velcro, a magnet, or the like) for adjusting a length. Accordingly, the mounting member 240 may stably surround a head area of the user and may fix a location of the main frame 210 while supporting a weight of the main frame 210. In various embodiments, the mounting member 240 may be replaced with eyeglass temples, a helmet, straps, or the like.

The electronic device 100 may be mounted on the front frame 230 based on the coupling member 231 and may interact with the HMD device 200. For example, an image displayed in a display area of the electronic device 100 may be displayed in the field of view of the user of the HMD device 200 through the lens assembly 233.

In various embodiments, the HMD device 200 may further include a cover member 250. The cover member 250 may assist in preventing and/or reducing the likelihood of separation of the electronic device 100 and may also protect the electronic device 100 from external impact. With regard to performing a function of the electronic device 100 (e.g., operating a camera 130), a partial area (e.g., an area corresponding to a location of the camera 130) of the cover member 250 may include, for example, an opening 251.

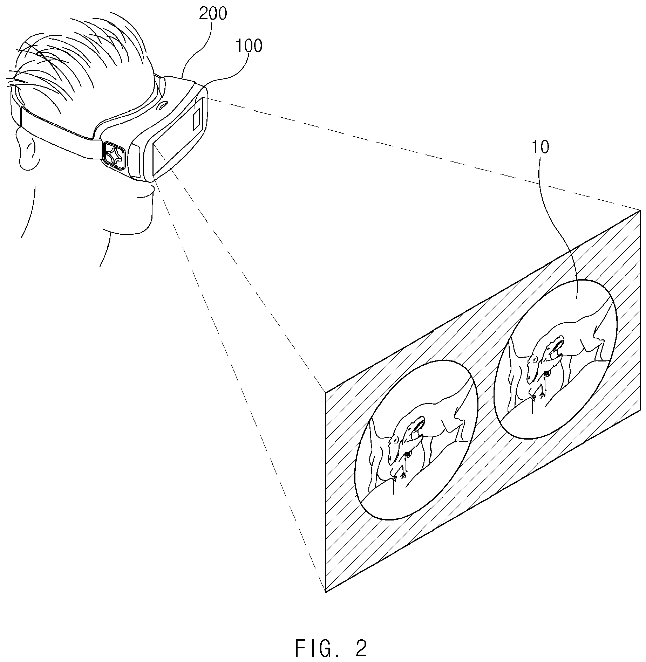

FIG. 2 is a diagram illustrating an example of an operation of a head mounted display device according to an example embodiment.

Referring to FIGS. 1 and 2, the HMD device 200 on which the electronic device 100 is mounted may display a screen in the field of view of the user. For example, the electronic device 100 mounted on the HMD device 200 may display an image in a display area, and the image may be displayed in a screen (e.g., a screen viewed through the lens assembly 233) that is displayed in the field of view of the user through the HMD device 200. In this operation, the electronic device 100 may execute a normal function (e.g., a function of displaying one image in a display area) or a virtual reality (VR) function (e.g., a function of displaying one image in a display area so as to be separated into a left-eye area and a right-eye area). In the case where the electronic device 100 displays an image based on the VR function, the user may view a VR image 10 through the lens assembly 233 of the HMD device 200. In various embodiments, to prevent distortion of an image due to lens included in the lens assembly 233, the VR function may inversely distort a two-dimensional image depending on a characteristic of the lens.

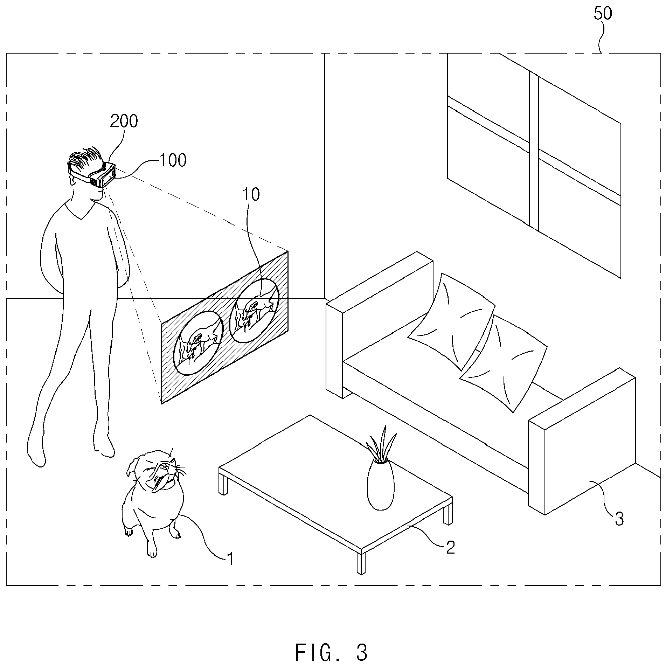

FIG. 3 is a diagram illustrating an example of a real space in which a head mounted display device according to an example embodiment is operated.

As illustrated in FIG. 3, the user that wears the HMD device 200 may be near or neighbor various objects (e.g., an animal 1, objects 2 and 3, a human body (not illustrated), and the like) in a real space. Alternatively, in the case where the user moves with regard to operating the HMD device 200 (e.g., executing a game through the VR image 10), the user may approach the objects.

Since only the VR image 10 is displayed in the field of view of the user that wears the HMD device 200, the user may fail to perceive a neighboring or approaching object or may fail to grasp an exact location of the object. In this case, there may be a risk of collision between the user wearing the HMD device 200 and the object existing within the real space. The collision may cause accidents, such as user injury and object damage, in addition to a simple physical contact. In this regard, the electronic device 100 according to an embodiment may detect an object existing within a specified distance from the HMD device 200 (or the user wearing the HMD device 200). If the object is detected, the electronic device 100 may switch an image displayed in the display area into an image associated with the object, thus providing the user with a notification associated with the object.

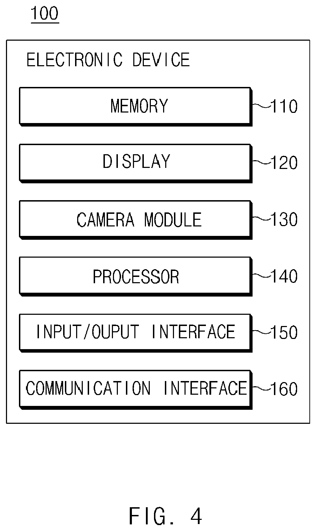

FIG. 4 is a diagram illustrating an example configuration of an electronic device according to an example embodiment.

Referring to FIG. 4, the electronic device 100 may include a memory 110, a display 120, a camera module (e.g., including camera circuitry) 130, a processor (e.g., including processing circuitry) 140, an input/output interface (e.g., including input/output circuitry) 150, and/or a communication interface (e.g., including communication circuitry) 160. In an embodiment, the electronic device 100 may not include at least one of the above-described elements or may further include any other element(s). In various embodiments, at least some of the above-described elements may be included as elements of the HMD device 200, or the electronic device 100 including the above-described elements may be included as an element of the HMD device 200.

The memory 110 may include a volatile and/or nonvolatile memory. For example, the memory 110 may store instructions or data associated with at least one other element of the electronic device 100. In various embodiments, the memory 110 may store an application program, and the application program may include, for example, at least one image data to be displayed through the display 120.

The display 120 may display various content (e.g., texts, images, video, icons, symbols, or the like). For example, the display 120 may display content corresponding to the at least one image data included in the application program. In various embodiments, in the case where the electronic device 100 operates the VR function, the display 120 may separate and display one image into two images corresponding to a left eye and a right eye of the user, respectively. In various embodiments, the display 120 may include a liquid crystal display (LCD), a light-emitting diode (LED) display, an organic LED (OLED) display, a microelectromechanical systems (MEMS) display, or an electronic paper display, or the like, but is not limited thereto.

The camera module 130 may include various camera circuitry and photograph a still image or a video. For example, if the electronic device 100 is mounted on the HMD device 200, the camera module 130 may photograph an image of an area in front of the HMD device 200. In an embodiment, after the electronic device 100 is mounted on the HMD device 200, the camera module 130 may be activated as soon as the HMD device 200 is driven or after a specified time elapses from a point in time when the HMD device 200 is driven. In various embodiments, the camera module 130 may be activated from a point in time when the electronic device 100 is mounted on the HMD device 200. Alternatively, the camera module 130 may be activated from a point in time when the user wears the HMD device 200.

In various embodiments, the camera module 130 may include various camera circuitry, such as, for example, and without limitation, at least one depth camera (e.g., a time of flight (TOF) manner or a structure light manner) and/or a color camera (e.g., an RGB camera). Also, the camera module 130 may further include at least one sensor (e.g., a proximity sensor) or light source (e.g., an LED array) with regard to executing a function. In various embodiments, the at least one sensor may be implemented with a module that is independent of the camera module 130 and may sense an area in front of the HMD device 200. For example, a sensor (e.g., proximity sensor) module may sense an object by emitting infrared rays (or ultrasonic waves) to an area in front of the HMD device 200 and receiving infrared rays (or ultrasonic waves) reflected from the object. In this case, the camera module 130 may be activated from a point in time when at least one object is sensed by the sensor module.

The processor 140 may include various processing circuitry and perform data processing or an operation associated with control or communication of at least one other element of the electronic device 100. For example, the processor 140 may obtain data of an image photographed by the camera module 130 and may detect an object existing within a photographing range of the camera module 130 based on the obtained image data. In this operation, the processor 140 may exclude an external device (e.g., a joystick paired with the HMD device 200) associated with the HMD device 200 from a detection target. In this regard, the processor 140 may store image data of at least part of the external device in the memory 110 upon setting pairing between the HMD device 200 and the external device. In an embodiment, the processor 140 may compare image data of at least one object detected within a photographing range of the camera module 130 with the image data stored in the memory 110. If the comparison result indicates that image data of a specific object coincides with the image data stored in the memory 110 by a specified numeric value or more, the processor 140 may determine whether the electronic device 100 or the HMD device 200 interacts with the specified object (or whether specified data are transmitted and received between the specific object and the electronic device 100 or the HMD device 200). The processor 140 may identify an object, which corresponds to the image data stored in the memory 110 and interacts with the electronic device 100 or the HMD device 200, as an external device paired with the HMD device 200 and may exclude the identified object from object detection targets.

In various embodiments, the processor 140 may exclude an object associated with the user wearing the HMD device 200 from the detection target. For example, the processor 140 may determine an object, which exists within a specified range (e.g., a range that is determined by a radius corresponding to the user's arm length) from the user wearing the HMD device 200, as a user's body and may exclude the determined object from the detection target. Alternatively, the processor 140 may determine an object that physically makes contact with an external device paired with the HMD device 200 as the body of the user gripping the external device and may exclude the determined object from the detection target.

In an embodiment, the processor 140 may calculate (determine) or detect the number of detected objects, the size of a detected object, a distance between a detected object and the HMD device 200, a movement of a detect object, or the like. The processor 140 may control the driving of the display 120 based on the calculated or detected result. This will be more fully described below.

In various embodiments, the processor 140 may include various processing circuitry, such as, for example, and without limitation, at least one of a dedicated processor, a central processing unit (CPU), an application processor (AP), and a communication processor (CP). As hardware, at least part of the processor 140 may access the memory 110 to perform a function associated with an instruction stored in the memory 110.

The input/output interface 150 may include various input/output circuitry and transfer a command or data from the user or another external device (e.g., the HMD device 200) to any other element of the electronic device 100. Also, the input/output interface 150 may output a command or data from any other element of the electronic device 100 to the user or another external device.

The communication interface 160 may include various communication circuitry and establish communication between the electronic device 100 and an external device (e.g., the HMD device 200). For example, the communication interface 160 may support communication with the external device through wireless communication (e.g., wireless fidelity (Wi-Fi), Bluetooth, near field communication (NFC), magnetic stripe transmission (MST), or the like) or wired communication.

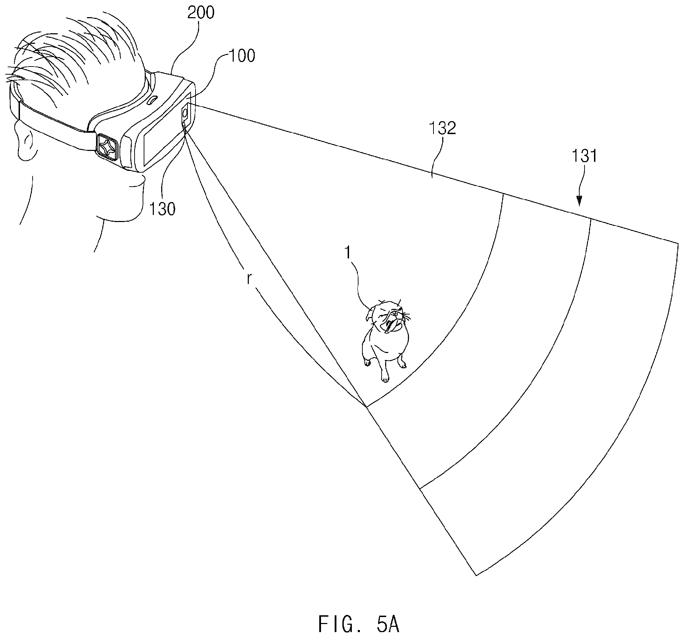

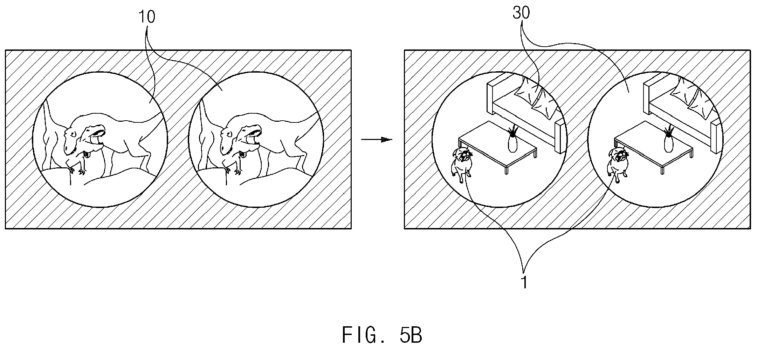

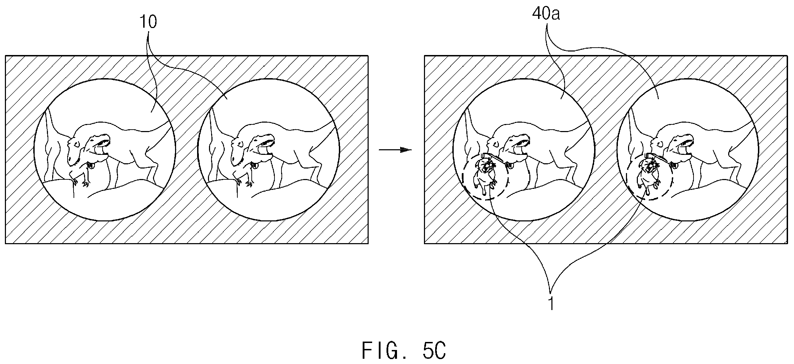

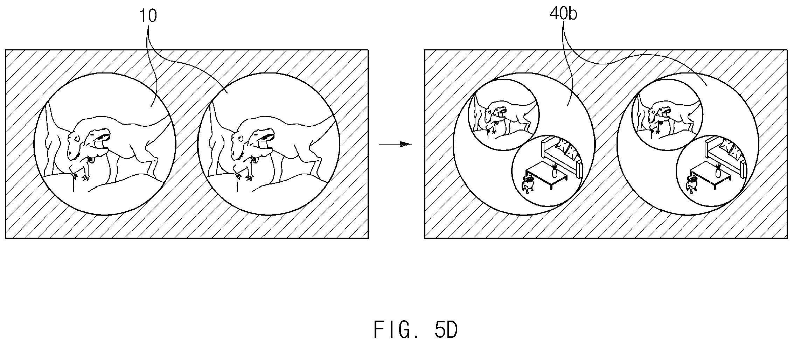

FIG. 5A is a diagram illustrating an example first embodiment in which an object exists within a first area, and FIGS. 5B, 5C and 5D are diagrams illustrating various examples of image switching according to the example first embodiment.

Referring to FIG. 5A, the user may operate the HMD device 200 on which the electronic device 100 is mounted in any real space. The camera module 130 installed in the electronic device 100 may be activated if a specific time elapses from a point in time when the HMD device 200 is driven. In various embodiments, the camera module 130 may be activated from a point in time when the electronic device 100 is mounted on the HMD device 200 or from a point in time when the user wears the HMD device 200.

At a point in time when the camera module 130 is activated, the HMD device 200 may be in a state where an image (e.g., a VR image) is displayed in the field of view of the user or in a state where the HMD device 200 makes ready for displaying an image. Various embodiments that will be described below (FIGS. 5A to 5D, FIGS. 6A and 6B, or FIGS. 7A and 7B) will be described as the HMD device 200 displays a VR image at a point in time when the camera module 130 is activated but may be identically or similarly applied to a state where the HMD device 200 makes ready for displaying the VR image.

The activated camera module 130 may continuously or periodically photograph an area in front of the HMD device 200. The camera module 130 may transfer the photographed image to a processor (140 of FIG. 4) of the electronic device 100 in real time, in the form of a batch, or in the form of a stream. The processor 140 may detect an object existing within a photographing range 131 of the camera module 130 based on the photographed image.

In an embodiment, in the case where at least one object (e.g., a dog 1) exists within the photographing range 131 of the camera module 130, the processor 140 may calculate (determine) a distance from the HMD device 200 to the object 1. If the calculated distance between the HMD device 200 and the object 1 is within a specified first distance "r", the processor 140 may determine that the object 1 exists within a first area 132 that is specified as an area from the HMD device 200 to a point spaced apart therefrom by the first distance "r".

In an embodiment, with regard to the at least one object 1 existing within the first area 132, the processor 140 may switch an image displayed in the display 120 of the electronic device 100 into an image taken by the camera module 130. In this case, as illustrated in FIG. 5B, the VR image 10 played on a screen of the HMD device 200 may be switched into a photographed image 30 associated with an area in front of the HMD device 200 based on driving of the camera module 130. In various embodiments, the processor 140 may control the electronic device 100 such that specified notification sound or vibration is output in switching into the photographed image 30. Also, in various embodiments, a numeric value indicating a distance between the HMD device 200 and the object 1 existing within the first area 132 may be displayed on the photographed image 30 thus switched.

Referring to another embodiment, in the case where the at least one object 1 exists within the first area 132, the processor 140 may switch an image displayed in the display 120 of the electronic device 100 into an augmented reality (AR) image. For example, the AR image may include an image in which at least part of the VR image 10 displayed on a screen of the HMD device 200 and at least part of the photographed image 30 photographed by the camera module 130 are overlaid (a picture in picture (PIP) manner). Accordingly, the AR image may include an image in which at least part of any one of the VR image 10 and the photographed image 30 is included in the other thereof. In this regard, referring to FIG. 5C, the VR image 10 displayed in the field of view of the user wearing the HMD device 200 may be switched into an AR image 40a in which a photographed image of the object 1 is overlaid on the VR image 10. In various embodiments, the processor 140 may control any other elements of the electronic device 100 such that an event such as specified notification sound or vibration is output, together with the image switching operation.

Referring to FIG. 5D according to another embodiment, in the case where the at least one object 1 exists within the first area 132, the processor 140 may switch an AR image, a type of which is different from that of the above-described AR image. For example, the AR image of the different type may include an image in which the VR image 10 displayed on the display 120 and the photographed image 30 of the camera module 130 are in parallel with each other in the same frame (e.g., a picture out picture (POP) manner). Accordingly, an image displayed on a screen of the HMD device 200 may be switched from the VR image 10 into an AR image 40b in which the VR image 10 and the photographed image 30 divided to have the specified size are displayed.

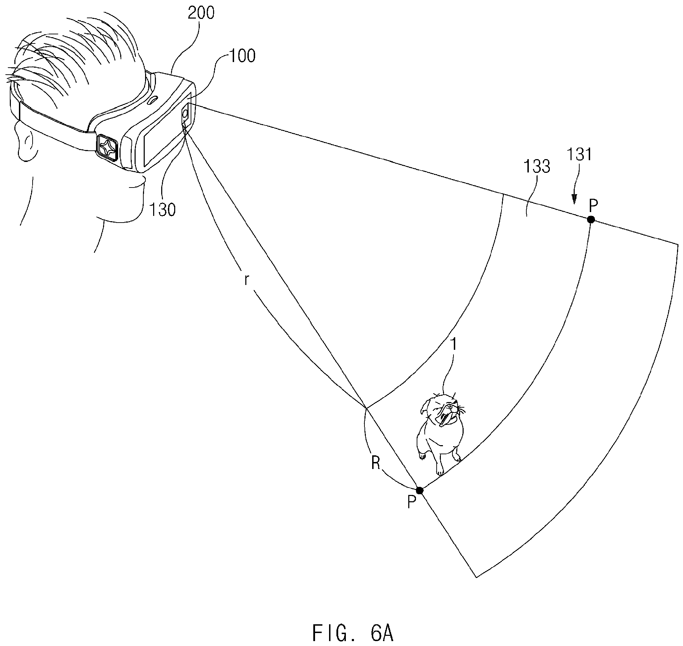

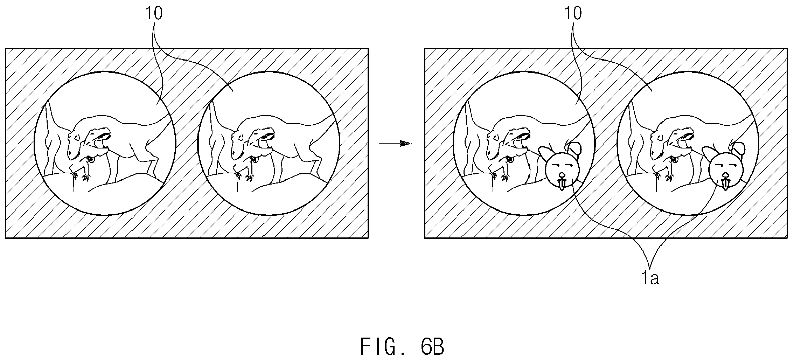

FIG. 6A is a diagram illustrating an example second embodiment in which an object exists within a second area, and FIG. 6B is a diagram illustrating an example of image switching according to the example second embodiment.

In FIG. 6A, an operation of detecting, at a processor (140 of FIG. 4) of the electronic device 100, an object existing within the photographing range 131 of the camera module 130 and operations attended by the detecting operation may be the same as or similar to the operations described with reference to FIG. 5A or may correspond to the operations described with reference to FIG. 5A.

In an embodiment, in the case where at least one object (e.g., a dog 1) exists within the photographing range 131 of the camera module 130, the processor 140 may calculate (determine) a distance from the HMD device 200 to the object 1. If the distance between the HMD device 200 and the object 1 exceeds the specified first distance "r" and is not greater than a third distance (e.g., a distance corresponding to a sum of the first distance "r" and a specified second distance "R"), the processor 140 may determine that the object 1 exists within a second area 133. For example, the second area 133 may include an area from a boundary of the above-described first area (132 of FIG. 5A) to a point "P" spaced apart therefrom by the specified second distance "R".

In an embodiment, in the case where the at least one object 1 exists within the second area 133, the processor 140 may add at least one content to at least one area of an image displayed in a display (120 of FIG. 4) of the electronic device 100. For example, the at least one content may include an icon, an image such as a shaded silhouette or a symbol, or a text such as characters, which are associated with the object 1 existing within the second area 133. In various embodiments, the processor 140 may control the electronic device 100 such that specified notification sound or vibration is output together with adding the content. As content is added to an image on the display 120, as illustrated in FIG. 6B, the VR image 10 that includes content 1a (e.g., an icon) associated with the object 1 may be displayed in the field of view of the user wearing the HMD device 200.

In various embodiments, in the case where the object 1 existing within the second area 133 is a dynamic object, the processor 140 may allow the content 1a to track a location of the dynamic object on an image displayed on the display 120. For example, the processor 140 may continuously or periodically analyze a photographed image provided from the camera module 130 in real time, in the form of a batch, or in the form of a stream to detect a direction variation of the object 1, a size variation of the object 1, a variation in a distance between the object 1 and the HMD device 200, or the like. If at least one variation is detected, the processor 140 may determine that the object 1 is a dynamic object. The processor 140 may track a movement of a dynamic object based on a photographed image and may adjust a location, at which the contents 1a is added on an image displayed in the display 120, so as to correspond to a location movement of the dynamic object.

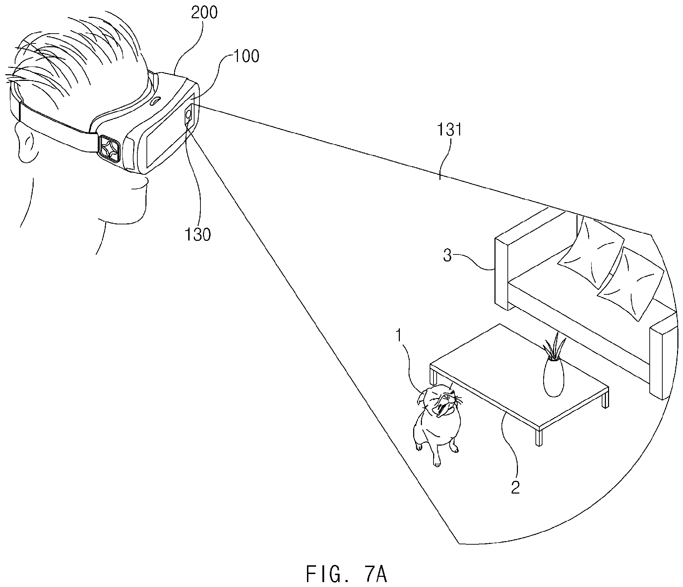

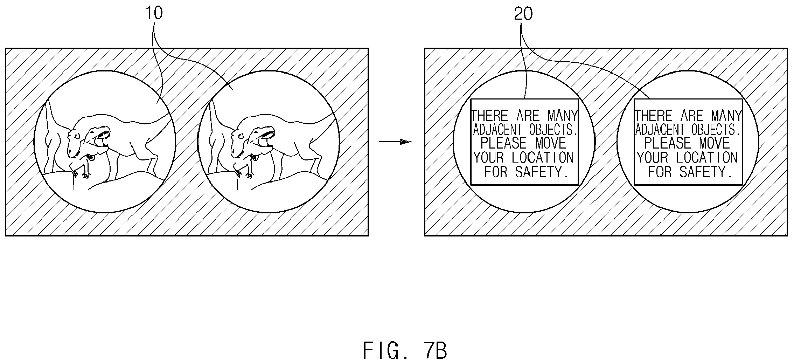

FIG. 7A is a diagram illustrating an example third embodiment in which an object exists within a photographing range, and FIG. 7B is a diagram illustrating an example of image switching according to the example third embodiment. An example embodiment that will be described with reference to FIGS. 7A and 7B may be associated with the execution of the operations and functions assumed in the embodiment described with reference to FIGS. 5A to 5D or in the embodiment described with reference to FIGS. 6A and 6B.

In FIG. 7A, operations associated with activating the camera module 130 may be the same as or similar to those described with reference to FIG. 5A. The activated camera module 130 may perform first photographing on an area in front of the HMD device 200 and may transfer the photographed image to a processor (140 of FIG. 4).

The processor 140 may calculate (determine) the number of objects (e.g., a dog 1, a table 2, and a sofa 3) existing within the photographing range 131 of the camera module 130, based on the first photographed image from the camera module 130. In an embodiment, if the calculated number of objects exceeds a specified threshold value, the processor 140 may switch an image displayed in a display (120 of FIG. 4) into at least one pop-up window. In this case, as illustrated FIG. 7B, the VR image 10 that is displayed in the field of view of the user wearing the HMD device 200 may be switched into at least one pop-up window 20. At least one text that is associated with a request to change a location of the HMD device 200 (or a location of the user wearing the HMD device 200) may be included in the pop-up window 20. However, the pop-up window 20 is not limited to FIG. 7B and may include various shapes, a plurality of pop-up windows, various contents, or the like.

In various embodiments, the processor 140 may calculate the sizes of the objects 1, 2, and 3 existing within the photographing range 131 of the camera module 130 based on the first photographed image. If the size of at least one object is larger than a specified threshold size, the processor 140 may switch the displayed VR image 10 into the pop-up window 20. In this operation, even though the calculated number of objects 1, 2, and 3 does not exceed a specified threshold value, the processor 140 may switch the VR image 10 into the pop-up window 20 if at least one object exceeds a threshold size.

As described above, a head mounted electronic device according to various embodiments, may include a display that displays a virtual reality (VR) image in left-eye and right-eye lens areas, a camera module comprising camera circuitry configured to photographs an image, and a processor that detects at least one object existing within a photographing range of the camera module based on a photographed image photographed by the camera module.

According to various example embodiments, the processor may switch the VR image to the photographed image or to switch the VR image to an augmented reality (AR) image including at least part of the photographed image if at least one object exists within a first area, the first area being an area from the camera module to a point spaced apart from the camera module by a first distance within the photographing range of the camera module.

According to various example embodiments, the processor may add at least one content associated with the object existing within a second area to the VR image if at least one object exists within the second area, the second area being an area from a boundary of the first area to a point spaced apart from the boundary of the first area by a second distance within the photographing range of the camera module.

According to various example embodiments, the processor may allow tracking a location variation of a dynamic object on the VR image if the at least one object existing within the second area is a dynamic object.

According to various example embodiments, the processor may determine a number of objects existing within the photographing range of the camera module based on an image that is photographed by the camera module after the head mounted electronic device is driven and may switch the VR image to at least one pop-up window if the determine number of objects exceeds a specified threshold number of objects.

According to various example embodiments, the pop-up window may include at least one text associated with a location change of the head mounted electronic device.

According to various example embodiments, the camera module may be activated after a specified time elapses from a point in time when the head mounted electronic device is driven.

According to various example embodiments, the head mounted electronic device may include at least one coupler on which an electronic device including at least one of the camera module and the processor is mounted.

According to various example embodiments, the camera module may be activated from a point in time when the electronic device is mounted on the head mounted electronic device.

According to various example embodiments, the processor may overlay a photographed image of at least part of the object existing within the first area on at least part of the VR image upon switching the VR image to the AR image.

According to various example embodiments, the processor may separately display the VR image and the photographed image, each of which has a specified size, on a single screen upon switching the VR image to the AR image.

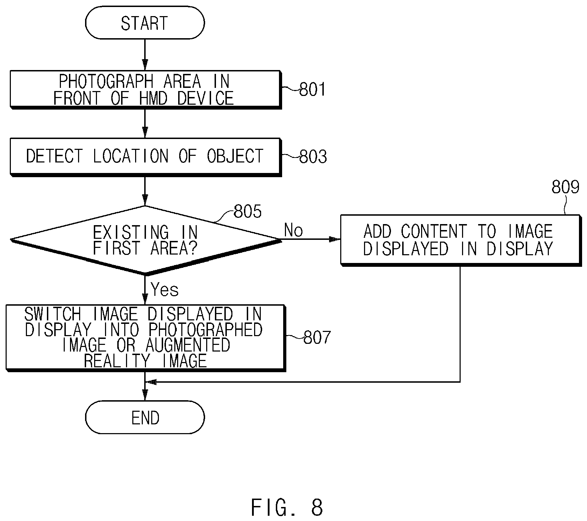

FIG. 8 is a flowchart illustrating an example image display method of an electronic device according to an example embodiment.

In operation 801, the HMD device 200 on which the electronic device 100 is mounted may be driven. In various embodiments, the camera module 130 of the electronic device 100 may be activated as soon as the electronic device 100 is mounted on the HMD device 200, at a point in time when a specified time elapses from a point in time when the HMD device 200 is driven, or at a point in time when the user wears the HMD device 200 on which the electronic device 100 is mounted. The activated camera module 130 may photograph an area in front of the HMD device 200. The camera module 130 may transfer the photographed image to the processor 140 of the electronic device 100 in real time.

In operation 803, the processor 140 may detect an object (e.g., an animal, a thing, a human body, or the like) existing (e.g., located) within a photographing range of the camera module 130 based on the image photographed by the camera module 130. In the case where at least one object is detected, the processor 140 may calculate a distance from the HMD device 200 (or the user wearing the HMD device 200) to the detected object.

In operation 805, the processor 140 may determine an area where the detected object is located, based on the calculated distance between the HMD device 200 and the detected object. An object that exists within the photographing range of the camera module 130 may be located in any one area of specified first, second, and third areas. The first area may include an area from the HMD device 200 to a point spaced apart therefrom by the specified first distance. The second area may include a second distance area between a boundary of the first area and a specified point of the photographing range. The third area may include the remaining area of the photographing range of the camera module 130 other than the first area and the second area.

If it is determined in operation 805 that the detected object is located within the first area, in operation 807, the processor 140 may switch an image displayed in the display 120 into the photographed image by the camera module 130. Alternatively, the processor 140 may switch an image displayed in the display 120 into an AR image including at least part of the photographed image by the camera module 130. In this operation, the processor 140 may control other elements of the electronic device 10, for example, such that specified notification sound or vibration of a specified pattern is output.

If it is determined in operation 805 that the detected object is located within the second area, in operation 809, the processor 140 may add at least one content on the image displayed in the display 120. For example, the content may include an icon, an image such as a shaded silhouette or a symbol, or a text such as characters, which are associated with the object 1 existing within the second area. In various embodiments, in the case where the object existing within the second area is a dynamic object, the processor 140 may control a location of the content on the image displayed in the display 120 to correspond to a location movement of the dynamic object.

Although not illustrated in FIG. 8, if it is determined in operation 805 that the object is located in the third area, the processor 140 may determine that the object is located at a point that is relatively distant from the HMD device 200. Accordingly, the processor 140 may not perform an operation (e.g., the above-described image switching or content adding operation) of providing a separate notification with regard to the object located in the third area.

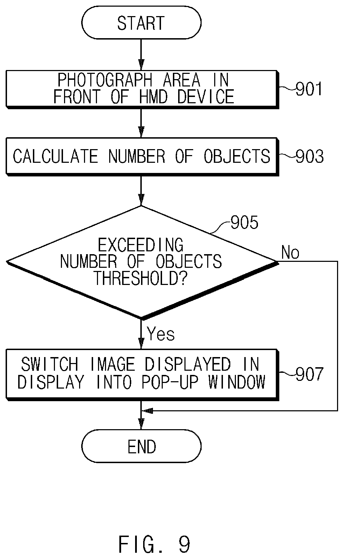

FIG. 9 is a flowchart illustrating an example image display method of an electronic device according to another example embodiment. Operations to be described below may be associated with an operation assumed in the operations described with reference to FIG. 8, for example.

In operation 901, the HMD device 200 on which the electronic device 100 is mounted may be driven, and the camera module 130 of the electronic device 100 may be activated. The activated camera module 130 may perform first photographing on an area in front of the HMD device 200 and may transfer the photographed image to the processor 140 of the electronic device 100.

In operation 903, the processor 140 may detect an object (e.g., an animal, a thing, a human body, or the like) existing within a photographing range of the camera module 130 based on the image first photographed by the camera module 130. If at least one or more objects are detected within the photographing range, the processor 140 may calculate the number of the detected objects. In various embodiments, the processor 140 may further calculate the size of the at least one object existing within the photographing range of the camera module 130.

In operation 905, the processor 140 may determine whether the calculated number of objects exceeds a specified threshold value. The specified threshold value may be set or changed by the user in consideration of an operating place of the HMD device 200, for example. If the calculated number of objects exceeds the specified threshold value, in operation 907, the processor 140 may switch an image displayed in the display 120 into at least one pop-up window. At least one text that is associated with a request to change a location of the HMD device 200 (or a location of the user wearing the HMD device 200) may be included in the pop-up window.

According to various embodiments, in operation 905, the processor 140 may further determine whether the calculated object size exceeds a specified threshold size. If the calculated object size exceeds the specified threshold size, in addition, if the calculated object size is larger than the specified threshold size even though the calculated number of objects does not exceed the specified threshold value, in operation 907, the processor 140 may switch the image displayed in the display 120 into a pop-up window.

As described above, a method of displaying an image for a head mounted electronic device may include displaying a virtual reality (VR) image in left-eye and right-eye lens areas, photographing an image of an area in front of the head mounted electronic device, detecting at least one object existing within a first area based on the photographed image, the first area being an area from the head mounted electronic device to a point spaced apart from the head mounted electronic device by a first distance, and switching the VR image to the photographed image or to an augmented reality (AR) image including at least part of the photographed image if at least one object exists within the first area.

According to various example embodiments, the method may further include detecting at least one object existing within a second area based on the photographed image, the second area being an area from a boundary of the first area to a point spaced apart from the boundary of the first area by a second distance, and adding at least one content associated with the at least one object existing within the second area to the VR image if at least one object exists within the second area.

According to various example embodiments, the adding of the at least one content may include allowing tracking a location variation of the object existing within the second area on the VR image.

According to various example embodiments, the method may further include determining, based on an image photographed after the head mounted electronic device is driven, a number of objects existing within a third area of a photographing range of the image other than the first area and the second area, and switching the VR image into at least one pop-up window if the determined number of objects exceeds a specified threshold number of objects.

According to various example embodiments, the pop-up window may include at least one text associated with a location change of the head mounted electronic device.

According to various example embodiments, t the photographing of the image may include starting photographing after a specified time elapses from a point in time when the head mounted electronic device is driven.

According to various example embodiments, the method may further include mounting, on the head mounted electronic device, an electronic device performing at least one of the photographing of the image, the detecting of the object, and the switching into the AR image.

According to various example embodiments, the photographing of the image may include starting photographing from a point in time when the electronic device is mounted on the head mounted electronic device.

According to various example embodiments, the switching to the AR image may include overlaying an image associated with at least part of the object existing within the first area on at least part of the VR image.

According to various example embodiments, the switching to the AR image may include separately displaying the VR image and the photographed image, each of which has a specified size, on a single screen.

According to various example embodiments, as an actually photographed image of an object adjacent to an HMD device is displayed on a screen displayed through the HMD device, it may be possible to perceive dangerous situations in a real space while operating the HMD device.

Besides, a variety of effects directly or indirectly understood through this disclosure may be provided.

While the present disclosure has been illustrated and described with reference to various example embodiments thereof, it will be understood by those skilled in the art that various changes in form and details may be made therein without departing from the spirit and scope of the present disclosure as defined by the appended claims and their equivalents.

## Claims

1. A head mounted electronic device comprising:
a display configured to display a virtual reality (VR) image in left-eye and right-eye lens areas;
a camera module comprising camera circuitry configured to photograph an image; and
a processor configured to detect at least one object existing within a photographing range of the camera module based on a photographed image photographed by the camera module,
wherein the processor is configured to:
switch the VR image to the photographed image or to switch the VR image to an augmented reality (AR) image including at least part of the photographed image, if at least one object exists within a first area, the first area being an area from the camera module to a point spaced apart from the camera module by a first distance within the photographing range of the camera module.

2. The head mounted electronic device of claim 1, wherein the processor is configured to:
add at least one content associated with the object existing within a second area to the VR image if at least one object exists within the second area, the second area being an area from a boundary of the first area to a point spaced apart from the boundary of the first area by a second distance within the photographing range of the camera module.

3. The head mounted electronic device of claim 2, wherein the processor is configured to:
allow tracking a location variation of a dynamic object on the VR image if the at least one object existing within the second area is a dynamic object.

4. The head mounted electronic device of claim 2, wherein the processor is configured to:
determine a number of objects existing within the photographing range of the camera module based on an image that is photographed by the camera module after the head mounted electronic device is driven; and
switch the VR image to at least one pop-up window if the determined number of objects exceeds a specified threshold number of objects.

5. The head mounted electronic device of claim 4, wherein the processor is configured to:
include at least one text associated with a location change of the head mounted electronic device in the pop-up window.

6. The head mounted electronic device of claim 1, further comprising:
at least one coupler on which an electronic device including at least one of the camera module and the processor is mounted.

7. The head mounted electronic device of claim 1, wherein the processor is configured to:
overlay a photographed image of at least part of the object existing within the first area on at least part of the VR image upon switching the VR image to the AR image.

8. The head mounted electronic device of claim 1, wherein the processor is configured to:
separately display the VR image and the photographed image, each of which has a specified size, on a single screen upon switching the VR image to the AR image.

9. A method of displaying an image for a head mounted electronic device, the method comprising:
displaying a virtual reality (VR) image in left-eye and right-eye lens areas;
photographing an image of an area in front of the head mounted electronic device;
detecting at least one object existing within a first area based on the photographed image, the first area being an area from the head mounted electronic device to a point spaced apart from the head mounted electronic device by a first distance; and
switching the VR image to the photographed image or to an augmented reality (AR) image including at least part of the photographed image if at least one object exists within the first area.

10. The method of claim 9, further comprising:
detecting at least one object existing within a second area based on the photographed image, the second area being an area from a boundary of the first area to a point spaced apart from the boundary of the first area by a second distance; and
adding at least one content associated with the at least one object existing within the second area to the VR image if at least one object exists within the second area.

11. The method of claim 10, wherein the adding of the at least one content includes:
allowing tracking a location variation of the object existing within the second area on the VR image.

12. The method of claim 10, further comprising:
determining, based on an image photographed after the head mounted electronic device is driven, a number of objects existing within a third area of a photographing range of the image other than the first area and the second area; and
switching the VR image into at least one pop-up window if the determined number of objects exceeds a specified threshold number of objects.

13. The method of claim 9, further comprising:
mounting, on the head mounted electronic device, an electronic device performing at least one of: the photographing of the image, the detecting of the object, and the switching into the AR image.

14. The method of claim 9, wherein the switching to the AR image includes:
overlaying an image associated with at least part of the object existing within the first area on at least part of the VR image.

15. The method of claim 9, wherein the switching to the AR image includes:
separately displaying the VR image and the photographed image, each of which has a specified size, on a single screen.
